# EUROPÄISCHE PATENTANMELDUNG

(11) **EP 4 140 272 A1**
(43) Veröffentlichungstag der Anmeldung: **01.03.2023**
(21) Anmeldenummer: 22191969.9
(22) Anmeldetag: 24.08.2022
(51) Int. Cl.: A01B 69/00, A01B 71/00, A01B 29/00, A01B 59/048, A01B 69/08, A01B 15/16

(54) **BODENBEARBEITUNGSGERÄT FÜR ACKERBÖDEN**

(30) Priorität: 30.08.2021 DE 102021122412
(71) Anmelder: Lemken GmbH & Co KG, 46519 Alpen (DE)
(72) Erfinder: Wübbels, Benedikt, 46325 Borken (DE)

(57) **Zusammenfassung**

Es wird ein Bodenbearbeitungsgerät (1) für Ackerböden mit einem zumindest einem Werkzeugrahmen (2) und daran angeordnete Bodenbearbeitungswerkzeuge (3, 3') und mit einer Anlenkvorrichtung (4) vorgeschlagen, welche beweglich und lenkbar mit dem Werkzeugrahmen (2) verbunden ist, wobei die Anlenkvorrichtung (4) mit einem landwirtschaftlichem Fahrzeug (5) verbunden ist, derart, dass bei einer seitlichen Fahrrichtungsänderung des Fahrzeugs (5) der Werkzeugrahmen (2) und die daran angeordnete Bodenbearbeitungswerkzeuge (3,3') der Fahrrichtung des Fahrzeugs (5) in einer passiven oder vorzugsweise nachlaufenden Lenkbewegung zwischen Werkzeugrahmen (2) und Anlenkvorrichtung (4) folgen, wobei mittels eines Stellmittels (6) eine entgegenwirkende Lenkkraft aufgebracht wird.

## Beschreibung

Die Erfindung betrifft ein Bodenbearbeitungsgerät für Ackerböden gemäß dem Oberbegriff des Patentanspruches 1.

Aus der Offenlegung EP383013A2 ist ein als Frontpacker konzipiertes Bodenbearbeitungsgerät bekannt. Dabei sind rotierende Werkzeuge über eine horizontale Achse drehbar an einem Werkzeugrahmen gelagert. Der Werkzeugrahmen wiederum ist über ein vorderes Führungsgelenk lenkbar mit einem Anbaurahmen verbunden, welcher durch einen Traktor geschoben wird. Eine hintere Führungskulisse am Anbaurahmen sichert den Werkzeugrahmen gegen Herunterfallen, sollte der Packer durch den Traktor ausgehoben werden und ermöglicht zugleich eine seitliche passive Lenkbewegung, sollte der Traktor zu einer Kurvenfahrt einlenken. In diesem Fall schwenkt das Bodenbearbeitungsgerät entgegengesetzt der Kurvenfahrt seitlich zum Anbaurahmen aus, so dass es entsprechend der Bewegungsfreiheit in der Führungskulisse der geplanten Kurvenfahrt des Traktors folgen kann. Im Gegensatz zu einem starr angebauten Bodenbearbeitungsgerät wird die Lenkbarkeit des Traktors auf dem Ackerboden verbessert.

Ein ähnliches Gerät ist im deutschen Patent DE3607691C2 offenbart. Allerdings wird das zuvor genannte Führungsgelenk aus obiger Offenlegung EP383013A2 durch einen virtuellen, vor dem Gerät angeordneten Führungspunkt ersetzt, welcher sich in einer gedachten Verlängerung aus zwei seitlichen Lenkern einer Viergelenkkoppel ergibt und somit eine kompaktere und modularere Bauweise des Bodenbearbeitungsgerätes ermöglicht.

Werden solche Geräte jedoch am Seitenhang eingesetzt, entsteht aufgrund der Hangneigung ein immanenter Seitendrift, welcher die Lenkfähigkeit des Schleppers beeinträchtigend verschlechtert. Insbesondere beim Einsatz automatischen, GPSgesteuerten Spurführungssystemen kann dies bis zum vollständigen Funktionsverlust des Berufungssystemen durch unbeherrschbare Seitenkräfte führen, welche auf das Bodenbearbeitungsgerät und somit den Schlepper wirken.

Aufgabe der Erfindung ist es, ein technisch einfaches und kostengünstiges Stellsystem bereitzustellen, welches obige Nachteile verringert oder vermeidet.

Diese Aufgabe wird durch die Merkmale des kennzeichnenden Teiles des Anspruches 1 gelöst.

Durch bewegliches Verbinden eines Werkzeugrahmens und daran angeordneten Bodenbearbeitungswerkzeugen eines Bodenbearbeitungsgerätes für Ackerböden mit einer zugehörigen Anlenkvorrichtung, welche wiederum mit einem landwirtschaftlichen Fahrzeug verbunden ist, ist eine passive Lenkbarkeit des Bodenbearbeitungsgerätes relativ zum Fahrzeug gewährleistet. Ändert das Fahrzeug seine Fahrtrichtung seitlich, folgt das Bodenbearbeitungsgerät in einer vorzugsweise nachlaufenden Bewegung der neu eingeschlagenen Fahrtrichtung. Durch Einsatz zumindest eines Stellmittels, welches zwischen Werkzeugrahmen und Anlenkvorrichtung vorgesehen ist, kann der passiven, vorzugsweise nachlaufenden Lenkbewegung des Werkzeugrahmens entgegengewirkt werden. Insbesondere bei Hangfahrt oder unterschiedlichen Bodenverhältnissen können Seitenkräfte, welche auf das Bodenbearbeitungsgerät wirken, verringert und oder kompensiert werden.

Erfindungsgemäß ist das Stellmittel insbesondere als Energiespeicher ausgebildet. Dies kann ein mechanischer Energiespeicher mit Federwirkung sein, ebenso aber ein pneumatisches oder/und hydraulisches Stellmittel sein, beispielsweise eine Zylinder- oder Balganordnung, welche mit einem Druckreservoir verbunden ist. Darüber hinaus kann das Stellmittel mit Stellenergie betätigbar oder beaufschlagbar ausgebildet sein. Durch Einsatz eines Stellmotors, welcher hydraulisch elektrisch oder pneumatisch betätigt wird, kann aktiv und einstellbar auf die Lenkbewegung des Werkzeugrahmens, welcher durch Seitenkräfte beeinträchtigt wird, ein- oder entgegengewirkt werden.

In einer vorteilhaften Anordnung ist das Stellmittel derart angeordnet, dass die Lenkbewegung zwischen Werkzeugrahmen und Anlenkvorrichtung in eine Neutral- und/oder Mittelstellung zurückgeführt wird. Somit wird ein Übersteuern des Bodenbearbeitungsgerätes bei auftretenden Seitenkräften vermieden. Unvorhergesehene Einflüsse auf die Lenkfähigkeit des Fahrzeuges werden damit ausgeschlossen, da die den Lenkbewegungen oder den Seitenkräften entgegenwirkende Stellkräfte oder Stellmomente des Stellmittels nicht über die Neutral- und/oder Mittelstellung des Bodenbearbeitungsgerätes hinaus auf das Werkzeug wirken. Negative Effekte in Richtung möglicher Seitenkräfte, welche auf das Bodenbearbeitungsgerät wirken, werden dadurch nicht verstärkt. Die Neutral- und/oder Mittelstellung des Bodenbearbeitungsgerätes ist als jene Position definiert, welches das Bodenbearbeitungsgerät in Arbeitsposition auf ebener, ungeneigter Bodenoberfläche bei Geradeausfahrt des Fahrzeuges und gleichmäßig auf das Bodenbearbeitungsgerät wirkenden eventuellen Bodenwiderständen einnehmen und beibehalten würde.

In einer besonderen Erfindungsform sind zwischen Werkzeugrahmen und Anlenkvorrichtung zumindest ein erster und ein zweiter Lenker derart angeordnet, dass eine Zwangsführung zwischen Werkzeugrahmen und an Lenkvorrichtung erfolgt, welche die Beweglichkeit in zumindest einem rotatorisch und/oder translatorische Freiheitsgrad limitiert. Vorzugsweise erfolgt die Zwangsführung derart, dass lediglich ein seitliches Schwenken zwischen Werkzeugrahmen und Anlenkvorrichtung ermöglicht wird. Dies bildet eine passive, insbesondere nachlaufende Lenkbewegung des Bodenbearbeitungsgerätes relativ zum Fahrzeug in Kombination mit der Erfindung ab, um eine seitliche Fahrtrichtungsänderung zu vollziehen, wie sie beispielsweise bei Kurvenfahrt erforderlich ist.

Dabei ist das zumindest eine Stellmittel zwischen Werkzeugrahmen und/oder der Anlenkvorrichtung einerseits und einem oder mehreren Lenkern andererseits angeordnet. Vorzugsweise ist das Stellmittel zwischen einem ersten und einem zweiten Lenker angeordnet. Die Anordnung der Stellmittel zwischen Werkzeugrahmen und/oder der Anlenkvorrichtung und/oder Lenkern erfolgt über Verbindungsgelenke, welche zumindest eine schwenkende oder rotierende Bewegung des Stellmittels relativ zum Lenker bzw. Wechselrahmen oder Anlenkvorrichtung zulässt. Ein Gelenklager kann beispielsweise mit einer Bohrung oder einem Durchbruch und einer Gelenkgabel oder Gelenklasche unter Zuhilfenahme eines Gelenkbolzens realisiert werden. Ebenso ist eine Verbindung in Art einer Haken-/Ösen-Kombination anwendbar.

Eine besonders vorteilhafte Anordnung des Stellmittels an dem ersten und zweiten Lenker erfolgt jeweils mittels mit den Lenkern verbundener Hebel, wobei an den abstehenden Hebelenden das Stellmittel beweglich oder gelenkig befestigt ist. Dabei weisen die Lenker eine Längserstreckung auf, von welchen sich die am Lenker befestigten Hebel seitlich oder quer erstrecken bzw. mit ihren Enden abstehen. Am jeweiligen Hebelende ist ein Gelenkpunkt zur Aufnahme des Stellmittels vorgesehen. Mit zunehmender Auslenkung der Lenker, welche sich durch eine Lenkbewegung des Bodenbearbeitungsgerätes zwischen Werkzeugrahmen und Anlenkvorrichtung ergibt, erfolgt eine Bewegung der jeweiligen Hebel bzw. ihrer Enden in entgegengesetzter Richtung zueinander. Die dadurch resultierende Abstandsänderung der Gelenkpunkte der jeweiligen Hebelenden resultiert in einer Längen- und/oder Winkeländerung des mit den Hebelenden gelenkig verbunden Stellmittels. Durch eine entgegenwirkende Stellkraft oder ein entgegenwirkendes Stellmoment des Stellmittels tritt eine Rückstellung der Hebel bzw. der damit verbundenen Lenker in ihre ursprüngliche Stellung ein, welche sich in der Neutral-/Mittelstellung des Bodenbearbeitungsgerätes einstellt.

In einer speziellen Ausführungsform sind die Lenker über Schwenkachsen bzw. Schwenklager mit dem Werkzeugrahmen pendelnd verbunden. Dabei erfolgt die Pendelbewegung vorzugsweise in lediglich seitlicher Richtung und jeweils je Lenker in einem rotatorischen Freiheitsgrad. Dabei sind die Schwenkachsen der Lenker schräg zueinander und vorzugsweise symmetrisch zur Mitte des Werkzeugrahmens angeordnet. Die Lenker stehen dabei in ihrer Längserstreckung beabstandet zu den Schwenkachsen ab. Alternativ sind die Schwenkachsen der Lenker parallel zueinander angeordnet, die Lenker jedoch selbst in ihrer Längserstreckung schräg zueinander vorzugsweise symmetrisch zur Mitte des Werkzeugrahmens weisend angeordnet. Im ersten Fall treffen sich die schrägen Schwenkachsen bzw. deren gedachte Verlängerungen in einem virtuellen Schnittpunkt. Im zweiten Fall treffen sich die gedachten Verlängerungen der Längserstreckung der jeweiligen Lenker in einem virtuellen Schnittpunkt. In dem ersten oder zweiten Fall bildet der virtuelle Schnittpunkt einen Momentanpol, um welche die Schwenkbewegung des Werkzeugrahmens relativ zur Anbauvorrichtung bzw. die Lenkbewegung des Bodenbearbeitungsgerätes relativ zum Fahrzeug erfolgt. Im ersten Fall ist dieser Momentanpol aufgrund der schrägen, zum Werkzeugrahmen unverändert angeordneten Schwenkachsen fest vorgegeben. Im zweiten Fall kann der Momentanpol der gedachten Verlängerungen der Längserstreckung der jeweiligen Lenker aufgrund ihrer Schwenkbarkeit zum Werkzeugrahmen seitlich wandern. Die seitliche Wanderbewegung des Momentanpols erfolgt jedoch aufgrund der konvergierenden Stellung der Lenker zueinander immer in Richtung der jeweils eingeschlagenen Fahrtrichtungsänderung. Durch entsprechende Wahl der Schrägstellung der Lenker bzw. deren jeweiligen Schwenkachsen kann der Momentanpol in beliebigen Abstand in Arbeitsrichtung vor das Bodenbearbeitungsgerät angeordnet werden.

In einer weiteren, alternativen Ausführungsform der Erfindung sind der Werkzeugrahmen und die Anlenkvorrichtung an einem ersten Ende mittels der Lenker pendelnd und an einem zweiten, dem ersten Ende des Werkzeugrahmens gegenüberliegenden Ende des Werkzeugrahmens schwenk- oder drehbar mit der Anlenkvorrichtung mittels eines weiteren Gelenkes verbunden. Dabei erstreckt sich die Anlenkvorrichtung in Arbeitsrichtung vorzugsweise und im Wesentlichen vollständig über das erste und das zweite Ende des Werkzeugrahmens hinweg oder darüber hinaus und endet am zuvor erwähnten Gelenkpunkt zwischen Werkzeugrahmen und Anlenkvorrichtung. Je weiter dieser Gelenkpunkt vom Ende des Werkzeugrahmens absteht, desto geringer fällt die seitliche Schwenkbewegung zwischen Werkzeughalm und Anlenkvorrichtung aus. Zugleich verringern sich jedoch auch die Lenkkräfte, welche vom Fahrzeug zur Änderung der seitlichen Fahrtrichtung auf das Bodenbearbeitungsgerät aufgebracht werden müssen bzw. der Einfluss störender Seitenkräfte. Analog gilt dies für den Lage des weiter oben genannten Momentanpols.

Weiterhin kann das Bodenbearbeitungsgerät mehrteilig ausgebildet sein, wobei der Werkzeugrahmen zumindest ein erstes und ein zweites Teilsegment ausweist, wobei das erste und das zweite Teilsegment von einer eine Arbeitsbreite des Bodenbearbeitungsgerätes definierenden Arbeitsstellung in eine Transportstellung bewegt werden können, welche eine Transportbreite definiert, die geringer als die Arbeitsbreite des Bodenbearbeitungsgerätes ist. Vorzugsweise sind an zumindest zwei Teilsegmenten gleich viele Bodenbearbeitungswerkzeuge angebracht und/oder symmetrisch angeordnet. Insbesondere bei die zulässige Transportbreite überschreitenden Arbeitsbreiten wirken gerade in den Randbereichen unterschiedliche, nicht kontrollierbare Widerstandskräfte auf das Bodenbearbeitungsgerät ein, welche das Lenkverhalten beeinflussen. Erfindungsgemäß kann korrigierend oder unterstützend das Lenkverhalten des Fahrzeuges überbreiten Bodenbearbeitungsgeräten verbessert werden. Insbesondere bei beweglich, und vorzugsweise rotatorisch an dem Werkzeugrahmen angeordneten Bodenbearbeitungswerkzeugen treten meist durch die Abroll- und Schneidwirkung der Werkzeuge bei verschiedenen Bodeneigenschaften negativ wirkende Seitenkräfte auf, welche das Lenkverhalten des Fahrzeuges bzw. der Gerätekombination stören. Auch hier werden die nachteiligen Wirkungen erfindungsgemäß vermindert oder behoben.

Die Erfindung zeichnet sich insbesondere dadurch aus, dass bei einer nachlaufenden Lenkbewegung eines Bodenbearbeitungsgerätes, welches vorzugsweise im Frontanbau eines Fahrzeuges betrieben wird, mittels eines Stellmittels unterstützend oder korrigierend in das Lenkverhalten eingegriffen werden kann, wenngleich der Charakter der passiven, vorzugsweise nachlaufenden Lenkbewegung im Betrieb des Bodenbearbeitungsgerätes erhalten wird. Weitere Einzelheiten und Vorteile des Erfindungsgegenstandes ergeben sich aus der nachfolgenden Beschreibung und den zugehörigen Zeichnungen, in denen ein Ausführungsbeispiel mit den dazu notwendigen Einzelheiten und Einzelteilen dargestellt ist. Es zeigen:
Fig.1 ein Fahrzeug 5 mit einem angebautem Bodenbearbeitungsgerät 1 in perspektivischer Darstellung,
Fig.2 ein Fahrzeug 5 mit einem angebautem Bodenbearbeitungsgerät 1 in einer alternativen Ausführungsform in Seitenansicht,
Fig. 3 eine Teilansicht aus Figur 1 in seitlicher Lenkbewegung des Bodenbearbeitungsgerätes 1 in Draufsicht,
Fig. 4 analog zu Figur 3 eine Teilansicht aus Figur 2 in Draufsicht,
Fig. 5 und 6 eine Teilansicht aus Figur 1 in einer anderen Perspektive von schräg unten nach vorne gesehen, jeweils in Mittel- sowie ausgelenkter Stellung,
Fig. 7 und 8 analog eine Teilansicht aus Figur 2 in einer anderen Perspektive von schräg unten nach vorne gesehen, ebenfalls in Mittel- sowie ausgelenkter Stellung und.
Figur 9 zeigt einen erfindungsgemäßen Schaltplan.

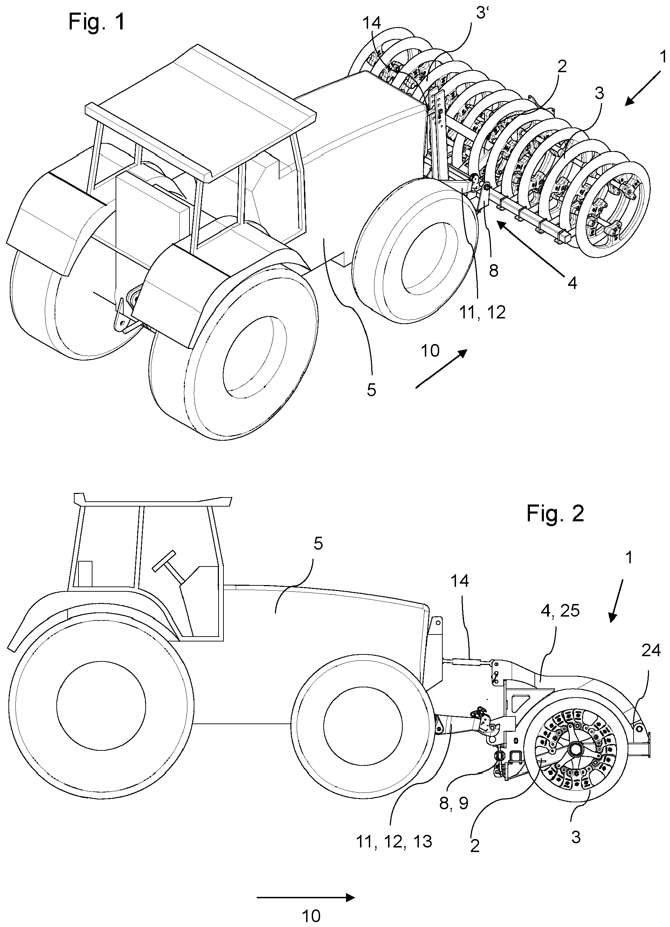

Figur 1 und Figur 2 zeigen jeweils ein landwirtschaftliches Fahrzeug 5 mit einem daran angebautem Bodenbearbeitungsgerät 1. Das Bodenbearbeitungsgerät besteht aus zumindest einem Werkzeugrahmen 2, an welchem Bodenbearbeitungswerkzeuge 3, 3' angeordnet sind. Eine weitere Anlenkvorrichtung 4 ist beweglich mit dem Werkzeugrahmen 2 verbunden. Über eine Aushubvorrichtung 11, welche vorzugsweise als Dreipunkthydraulik aus zwei Unterlenkern 12, 13 sowie einem Oberlenker 14 besteht, ist die Anlenkvorrichtung 4 und somit das Bodenbearbeitungsgerät 1 höhenbeweglich und aushebbar mit dem Fahrzeug 5 verbunden. Das Bodenbearbeitungsgerät 1 wird mittels des Fahrzeuges 5 in einer abgesenkten Arbeitsposition, in welchem die Bodenbearbeitungswerkzeuge 3, 3' mit dem Ackerboden in Kontakt stehen, in einer Fahrtrichtung 10 bzw. Arbeitsrichtung vorwärts bewegt. In einer ausgehobenen Position befindet sich das Bodenbearbeitungsgerät 1 oberhalb des Ackerbodens, um beispielsweise ein Wendemanöver oder eine Transportfahrt anzutreten. In dem in Figur 2 gezeigten Beispiel ist die Anlenkvorrichtung 4 als Tragrahmen 25 gebildet, welcher über ein ersten Gelenkpunkt 24 mit dem Werkzeugrahmen 2 gelenkig verbunden ist. Auf einer weiteren, dem Gelenkpunkt 24 gegenüberliegenden Seite des Werkzeugrahmens 2 sind zwei weitere Lenker 8, 9 als Bestandteil der Anlenkvorrichtung 4 jeweils gelenkig mit dem Werkzeugrahmen 2 sowie der Anlenkvorrichtung 4 verbunden. Diese Anordnung ermöglicht ein seitliches Ausschwenken des Werkzeugrahmens 2 und der daran angeordneten Bodenbearbeitungswerkzeuge 3, 3' um den Gelenkpunkt 24, falls das Fahrzeug eine Kurvenfahrt einschlägt und das Bodenbearbeitungsgerät durch eine passive Nachlauflenkung mit seiner Arbeitsrichtung 10 den Verlauf der Kurvenfahrt folgt. In Figur 1 wird die Anlenkvorrichtung 4 durch zwei einzelne Lenker 8 und 9 gebildet, wobei der Lenker 8 sichtbar und der Lenker 9 seitlich zur Fahrtrichtung 10 gesehen gegenüberliegend zu Lenker 8, durch das Fahrzeug 5 verdeckt, angeordnet sind. Die Lenker 8 und 9 sind einerseits schwenkbar oder pendelnd jeweils um eine Schwenkachse mit dem Werkzeugrahmen 2 einerseits sowie andererseits jeweils mit den Unterlenkern 12 und 13 der Aushubvorrichtung 11 gelenkig oder pendelnd verbunden. Mangels zusätzlichem Tragrahmen ist der Oberlenker 14 der Aushubvorrichtung 11 mit dem Fahrzeug 5 und direkt mit einem Turm des Werkzeugrahmens 2 gelenkig verbunden. Da der Oberlenker 14 auch seitlich schwenken kann, ist durch eine entsprechende Anordnung der Schwenkachsen, welche die Lenker 8 und 9 gelenkig oder pendelnd mit dem Werkzeugrahmen verbinden, ebenfalls eine nachlaufende Lenkbewegung des Werkzeugrahmens 2 und der daran angeordneten Bodenbearbeitungswerkzeuge 3, 3' im Falle einer Kurvenfahrt des Fahrzeuges gewährleistet.

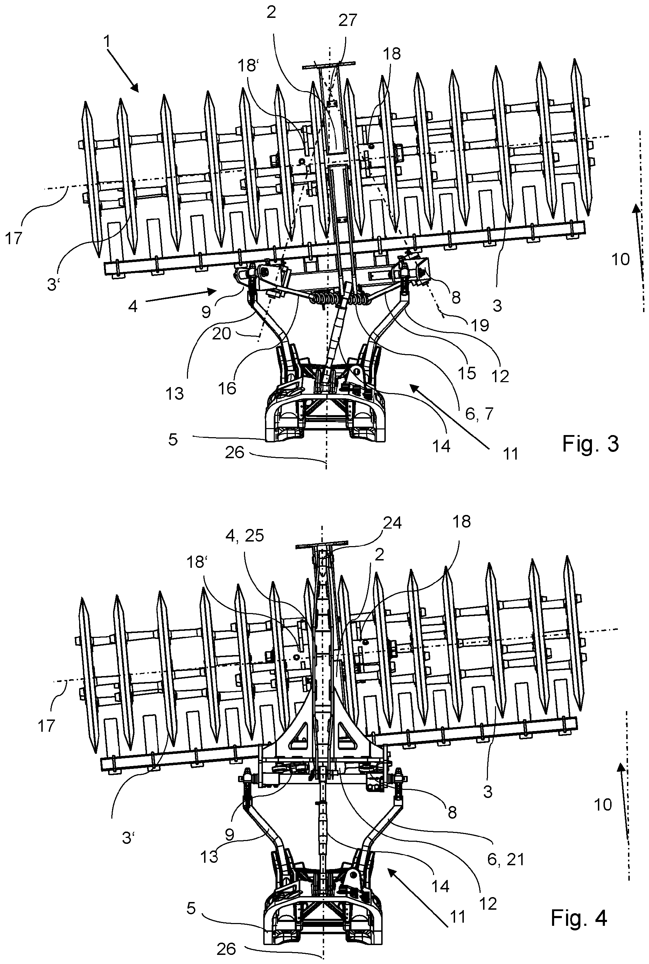

Analog zu den vorherigen Figurenbeschreibungen zeigen Figur 3 eine Draufsicht die Anordnung aus Figur 1 und Figur 4 eine Draufsicht der Anordnung aus Figur 2. Aus Gründen der Übersichtlichkeit ist lediglich ein Vorderteil des Rahmens des Fahrzeuges 5 mit deren daran angeordneten Aushubvorrichtung 11, hier bestehend aus aushebbaren Unterlenkern 12 und 13 sowie dem in mehreren Freiheitsgraden beweglich angeordneten Oberlenker 14. Die Bodenbearbeitungswerkzeuge 3, 3' sind exemplarisch als kreis- oder ringförmige Schneid- oder Rückverfestigungswerkzeuge ausgebildet, welche seitlich beabstandet zueinander angeordnet sind. Über jeweilige Abstandsstege kann der Abstand der Bodenbearbeitungswerkzeuge zueinander und somit auch die gesamte Arbeitsbreite des Bodenbearbeitungsgerätes bestimmt werden. Die Bodenbearbeitungswerkzeuge 3, 3' rotieren durch die Vorwärtsbewegung des Fahrzeuges 5 bei Bodenkontakt um die Achse 17 und sind mit einer oder mehrerer Lagerverbindungen, hier als Nabe 18 und 18' ausgebildet, drehbar mit dem Werkzeugrahmen 2 verbunden. Gut erkennbar ist die Lenkbewegung des Bodenbearbeitungsgerätes 1, mit welchem der Werkzeugrahmen 2 und die daran angeordneten Bodenbearbeitungswerkzeuge 3, 3' seitlich zum Mittelinie 26 des Fahrzeuges 5 ausschwenkt und der eingeschlagenen Fahrtrichtung 10, welche von der Geradeausfahrt abweicht, folgt. Wie bereits zu Figur 1 dargelegt, wird die Anlenkvorrichtung 4 durch einen ersten Lenker 8 und einen zweiten Lenker 9 gebildet. Diese sind jeweils über ein Kugelgelenk mit dem vorderen Ende der jeweiligen Unterlenker 12 und 13 in mehreren Freiheitsgraden dreh- und schwenkbar miteinander verbunden. Darüber hinaus sind der Lenker 8 um eine Schwenkachse 19 und der Lenker 9 um eine Schwenkachse 20 jeweils pendelnd mit dem Werkzeugrahmen 2 verbunden. Da die beiden Schwenkachsen 19 und 20 schräg zueinander angeordnet sind, verkürzt sich im Falle einer Lenkbewegung, in Fahrtrichtung gesehen, der Abstand des einen Lenkers 9 auf Höhe des Unterlenkers 13 zu Achse 17, während sich der Abstand des anderen Lenkers 8 auf Höhe des Unterlenkers 12 relativ zu Achse 17 vergrößert. Da die beiden Achsen 19 und 20 fix zum Werkzeugrahmen 2 angeordnet sind und deren gedachte Verlängerung in einem vorderen Schnittpunkt konvergieren, bildet der vordere Schnittpunkt 27 einen Momentanpol, um welcher der Werkzeugrahmen 2 mit den daran angeordneten Bodenbearbeitungswerkzeugen 3, 3' der Lenkbewegung des Fahrzeuges 5 tatsächlich hinterher bzw. nach läuft.

Anstelle des Momentanpols, welcher in Figur 3 durch den Schnittpunkt 27 gebildet wird, ist der Werkzeugrahmen 2 in Figur 4 mit den daran angeordneten Bodenbearbeitungswerkzeugen 3, 3' mittels eines Gelenkes 24 im vorderen Bereich des Bodenbearbeitungsgerätes 1 an der Anlenkvorrichtung 4 schwenk- und lenkbar befestigt. Das Gelenk ist vorzugsweise als Kugel- oder Kreuzgelenk ausgelegt, zumindest aber derart, dass es eine rotatorische Bewegung um zumindest zwei Freiheitsgrade ermöglicht. Im hinterem Bereich Bodenbearbeitungsgerätes 1 ist der Werkzeugrahmen 2 mittels zweier pendelnd gelagerter Lenker 8 und 9, wie dargestellt, seitlich schwenkbar zu Anlenkvorrichtung 4 angeordnet. Vom hinteren Ende der Anlenkvorrichtung 4 erstreckt sich ein Tragrahmen 25 bis nach vorne zum Gelenk 24. Schlägt das Fahrzeug 5 nun eine Kurvenfahrt ein, lenkt das Bodenbearbeitungsgerät 1 bzw. sein Werkzeugrahmen 2 um das Gelenk 24 seitlich aus. Die Lenkbewegung wird durch die hinteren Lenker 8 und 9 geführt, welche seitlich auslenken und die Nachlenkbewegung des Bodenbearbeitungsgerät 1 in die neue Fahrtrichtung 10 ermöglichen. Zwischen den beiden Lenkern 8 und 9 ist das Stellmittel angeordnet, welches eine Rückstellung des Werkzeugrahmens 2 in eine Mittelstellung ermöglicht oder die Rücklenkbewegung des Werkzeugrahmens 2 in die Mittelstellung, welche sich bei erneuter Geradeausfahrt nach einer Kurvenfahrt einstellt, unterstützt. Das Stellmittel ist in der in Figur 4 gezeigten Ausführungsbeispiel als Fluidzylinder 21 ausgebildet. Dieser kann mit einem Druckspeicherbehälter und/oder mit einer Druckquelle des Fahrzeuges 5 verbunden sein, um bei Druckbeaufschlagung eine Rückstellbewegung des Werkzeugrahmens 2 in die Mittelstellung des Bodenbearbeitungsgerätes 1 einzuleiten oder zu bewirken. Wie bereits in Figur 3 und Figur 4 beschrieben, ist die Anlenkvorrichtung 4 mittels zweier Unterlenker 12 und 13 und einem Oberlenker 4 über die Aushubvorrichtung 11 mit dem Fahrzeug 5 verbunden. Die seitlichen Lenkkräfte, welche sich bei Kurvenfahrt des Fahrzeuges 5 ergeben, werden über die Unterlenker auf die jeweilige Anlenkvorrichtung 4 übertragen. Da der Werkzeugrahmen 2 mit seinen Bodenbearbeitungswerkzeugen 3, 3' in Arbeitsstellung mit Ackerboden in Eingriff steht, erfolgt als Reaktion der seitlichen Lenkkraft die jeweilige Lenkbewegung des Werkzeugrahmens 4 relativ zu Anlenkvorrichtung um den Gelenkpunkt 24 bzw. dem virtuellen Schnittpunkt 27 als Momentanpol. Wird das Bodenbearbeitungsgerät durch die Aushubvorrichtung 11 angehoben, stellt sich mangels Bodenkontakt eine Mittelstellung des Bodenbearbeitungsgerätes 1 ein, wobei die Rückstellbewegung in die Mittelstellung durch das Stellmittel 6 durch seine Stellkräfte unterstützt und die Mittelstellung gehalten wird.

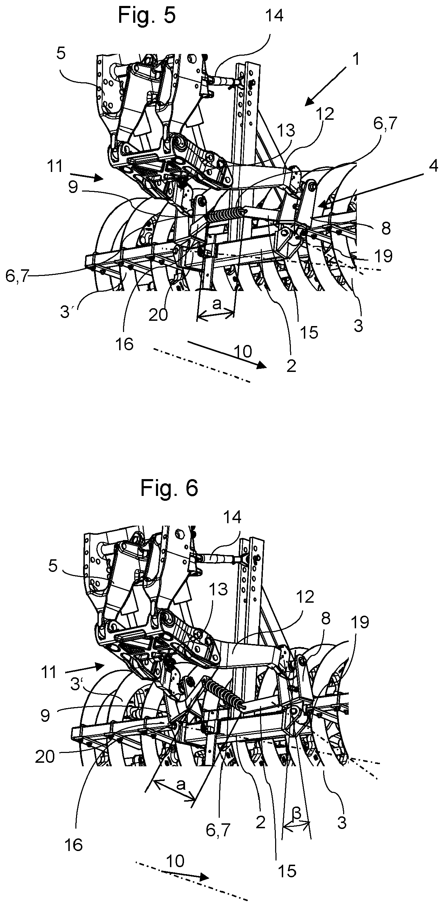

Figur 5 und Figur 6 zeigen die aus Figur 1 und Figur 3 beschriebenen Vorrichtung in einer weiteren Perspektive mit Blick auf die Anlenkvorrichtung 4. Dabei ist nur der Vorderteil des Fahrzeuges 5 mit seiner zugehörigen Hubvorrichtung 11 sowie der hintere Teil des Bodenbearbeitungsgerätes 1 dargestellt. An den beiden Unterlenkern 12 und 13 der Hubvorrichtung 11 sind die beiden Lenker 8 und 9 nach unten hin und seitlich pendelnd aufgehängt. Unteren Ende sind die beiden Lenker 8 und 9 jeweils über die zueinander konvergierend angeordneten Achsen 19 und 20 schwenkbar an einem Querträger des Werkzeugrahmens 2 angeordnet. In Figur 5 ist die mittlere Stellung der Anlenkvorrichtung 4 dargestellt. Jeweils seitlich nach innen erstrecken sich von den beiden Lenkern 8 und 9 zwei Hebel 15 und 16. Zwischen den beiden Hebeln ist das Stellmittel 6 beweglich angeordnet. In Figur 5 und 6 ist das Stellmittel als Energiespeicher 7 ausgebildet. Der Energiespeicher 7 ist hier als Zugfeder dargestellt, die mit seinen hakenartig ausgebildeten Federenden jeweils in eine endseitige Ausnehmung eines jeweiligen Hebels 15 und 16 eingehängt ist. Der Energiespeicher 7 ist vorzugsweise vorgespannt und erstreckt sich über ein dargestelltes, minimales Einbaumaß a. Das Einbaumaß a stellt zugleich den minimal wirksamen Abstand der beiden Enden der Hebel 15 und 16 dar.

Figur 6 stellt die Situation aus Figur 5 während einer Kurvenfahrt des Fahrzeuges 5 dar. Durch die Kurvenfahrt werden die beiden Hebel 8 und 9 durch die Unterlenker 12 und 13 mit einer Seitenkraft beaufschlagt und schwenken um die jeweiligen Achsen 19 und 20 mit dem Winkel β seitlich weg. Entsprechend der Schwenkbewegung von Lenker 8 schwenkt der Hebel 15 nach unten sowie der Lenker 16 mit dem Hebel 9 nach oben weg. Hierdurch vergrößert sich das Einbaumaß a des Energiespeichers 7 und erzeugt, sofern als Zugfeder ausgebildet, eine Rückstellkraft, welche der Lenkbewegung des Werkzeugrahmens 2 relativ zum Fahrzeug 5 entgegenwirkt und die Rückstellbewegung zur in Figur 5 dargestelltem Zustand bewirkt oder unterstützt. Alternativ zum Energiespeicher 7 kann auch ein Fluidzylinder eingebaut werden, welcher die Rückstellkräfte in die jeweiligen Hebel 15 und 16 einleitet. Für die weiteren Bezugszeichen aus Figur 5 und 6 und deren Funktion wird auf die vorherigen Figurenbeschreibungen verwiesen.

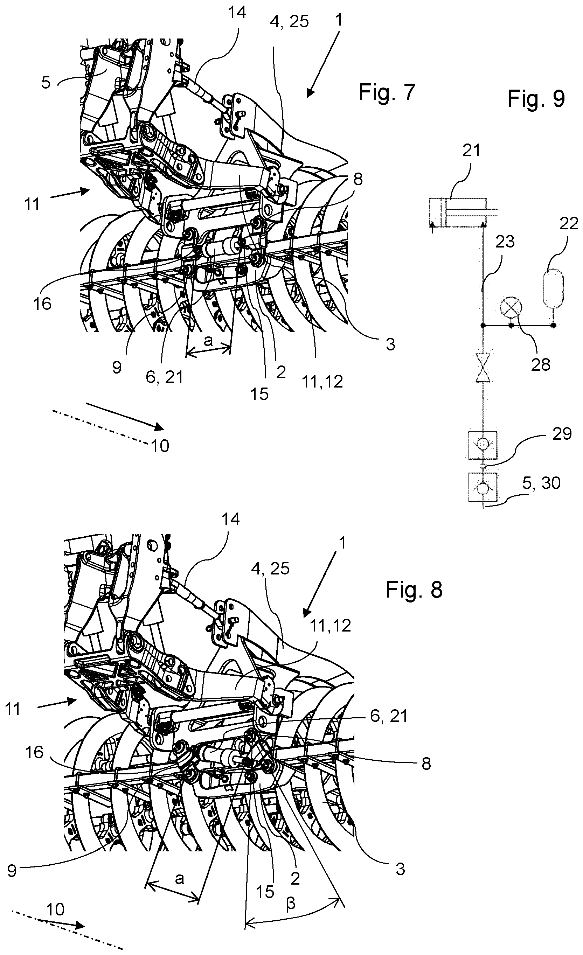

Figur 7 und Figur 8 zeigen aus gleicher Perspektive wie die Figuren 5 und 6 die jeweilige Mittelstellung sowie die Position bei Kurvenfahrt, wie sie zuvor in Figur 2 und 4 als alternative Ausführungsform der Anlenkvorrichtung 4 dargestellt sind. Die Anlenkvorrichtung 4 ist mittels zweier Unterlenker 12 und 13 sowie einem Oberlenker 14 höhenbeweglich an der Hubvorrichtung 11 des Fahrzeuges 5 befestigt. Zwei Lenker 8 und 9 sind zumindest seitlich pendelnd und vorzugsweise nach unten gerichtet an der Anlenkvorrichtung 4 angeordnet. Am gegenüberliegenden Ende der jeweiligen Lenker befinden sich weitere Anlenkpunkte, welche einen Querträger des Werkzeugrahmens 2 ebenfalls gelenkig mit den jeweiligen Lenkern 8 und 9 verbinden. Wie bereits zu Figur 5 beschrieben, stehen von den jeweiligen Lenkern 8 und 9 zwei Hebel 15 und 16 jeweils nach innen ab und bilden mit den nach innen abstehenden Enden das wirksame Einbaumaß a für das Stellmittel 6. An diesen zueinander zeigenden Enden der Hebel 15 und 16 ist mittels einer Gelenkverbindung das Stellmittel 6 angeordnet. In der in Figur 7 dargestellten Mittelstellung ist das Einbaumaß a minimal bzw. bildet den geringsten Abstand der inneren Hebelenden zueinander. Das Stellmittel ist als Fluidzylinder 21 ausgebildet und, wie in Figur 9 schematisch dargestellt, über ein Druckleitungssystem 23 mit einem Druckspeicher 22 und/oder einer Druckquelle 30, beispielsweise einem Steuerventil des Fahrzeuges 5, vorzugsweise über eine lösbaren Kupplung 29 verbunden. Mittels einer Anzeigevorrichtung 28 kann ein auf den Fluidzylinder 21 zu beaufschlagender Druck einfach und passend eingestellt werden. Da ein Fahrzeug sowohl hydraulische als auch pneumatische Druckquellen aufweisen kann, bieten sich beide Möglichkeiten an. Der optionale Druckspeicher 22 ist vorzugsweise als hydro-pneumatischer Speicher ausgebildet, welcher mittels einer Membran oder einem Trennkolben ein unter Druck stehendes Speicherreservoir vom restlichen Druckleitungssystem 23 trennt. Der Druckspeicher 22 wird bei einer hydraulischen Druckquelle des Fahrzeugs zusätzlich zum Einbau empfohlen.

Wie bereits zu Figur 6 beschrieben, schwenkt auch in Figur 8 der Werkzeugrahmen 2 und somit die beiden Lenker 8 und 9 mit einem Winkel β relativ zu einem Querträger der Anlenkvorrichtung 4 aus. Entsprechend der Auslenkung von Hebel 8 schwenkt der Hebel 15 nach unten sowie Hebel 16 mit Lenker 9 nach oben. Entsprechend vergrößert sich der Abstand der beiden zueinander weisenden Hebelenden von Hebel 15 und 16 und somit das zuvor beschriebene Einbaumaß a. Der Fluidzylinder 21 wird somit auseinandergezogen. Wird dieser mit einem Druck beaufschlagt, erzeugt er eine Zugkraft und bewirkt ein Rückpendeln der beiden Lenker 8 und 9 und somit eine Rückstellung des Werkzeugrahmens 2 in die zuvor beschriebene Mittelstellung. Für beide Ausführungsbeispiele in Figur 5 bis 8 erkennt der Fachmann, dass eine Auslenkbewegung des Werkzeugrahmens 2 in die jeweils andere Lenkrichtung ebenfalls mit dem jeweiligen Stellmittel 6 in eine Mittelstellung zurückgeführt werden kann. Zu den jeweils anderen Bezugszeichen und deren Funktion wird auf die vorherige Figurenbeschreibung verwiesen.

**BEZUGSZEICHEN LISTE**

| | |
|---|---|
| 1 | Bodenbearbeitungsgerät |
| 2 | Werkzeugrahmen |
| 3 | Bodenbearbeitungswerkzeuge |
| 4 | Anlenkvorrichtung |
| 5 | Fahrzeug |
| 6 | Stellmittel |
| 7 | Energiespeicher |
| 8 | Lenker |
| 9 | Lenker |
| 10 | Fahrtrichtung |
| 11 | Aushubvorrichtung |
| 12 | Unterlenker |
| 13 | Unterlenker |
| 14 | Oberlenker |
| 15 | Hebel |
| 16 | Hebel |
| 17 | Achse |
| 18 | Nabe |
| 19 | Achse |
| 20 | Achse |
| 21 | Fluidzylinder |
| 22 | Druckspeicher |
| 23 | Druckleitung |
| 24 | Gelenk |
| 25 | Tragrahmen |
| 26 | Fahrzeugmitte |
| 27 | Schnittpunkt |
| 28 | Anzeige |
| 29 | Kupplung |
| 30 | Druckquelle |

## Patentansprüche

1. Bodenbearbeitungsgerät (1) für Ackerböden mit einem zumindest einem Werkzeugrahmen (2) und daran angeordneten Bodenbearbeitungswerkzeugen (3, 3'), welche in einer Arbeitsstellung im Eingriff mit dem Ackerboden stehen, mit einer Anlenkvorrichtung (4), welche beweglich und lenkbar mit dem Werkzeugrahmen (2) verbunden ist, wobei die Anlenkvorrichtung (4) mit einem landwirtschaftlichem Fahrzeug (5) verbunden ist, derart, dass bei einer seitlichen Fahrrichtungsänderung des Fahrzeugs (5) der Werkzeugrahmen (2) und die daran angeordnete Bodenbearbeitungswerkzeuge (3,3') der Fahrrichtung des Fahrzeugs (5) in einer passiven oder vorzugsweise nachlaufenden Lenkbewegung zwischen Werkzeugrahmen (2) und Anlenkvorrichtung (4) folgen,
**dadurch gekennzeichnet,**
**dass** zwischen Werkzeugrahmen (2) und Anlenkvorrichtung (4) zumindest ein Stellmittel (6) angeordnet ist, welches der passiven, vorzugsweise nachlaufenden Lenkbewegung des Werkzeugrahmens (2) und der daran angeordneten Bodenbearbeitungswerkzeuge (3, 3') entgegenwirkend angeordnet ist.

2. Bodenbearbeitungsgerät nach Anspruch 1,
**dadurch gekennzeichnet,**
wobei das Stellmittel (6) als Energiespeicher (7) ausgebildet ist

3. Bodenbearbeitungsgerät nach Anspruch 1 oder 2,
**dadurch gekennzeichnet,**
**dass** das Stellmittel (6) mit Stellenergie betätigbar ausgebildet ist

4. Bodenbearbeitungsgerät nach vorstehenden Ansprüchen,
**dadurch gekennzeichnet,**
wobei das zumindest eine Stellmittel (6) die Lenkbewegung zwischen Werkzeugrahmen (2) und Anlenkvorrichtung (4) in eine Neutral- und/oder Mittelstellung zurückführend ausgebildet ist.

5. Bodenbearbeitungsgerät nach vorstehenden Ansprüchen,
**dadurch gekennzeichnet,**
wobei zwischen Werkzeugrahmen (2) und Anlenkvorrichtung (4) zumindest ein erster und zweiter Lenker (8, 9) angeordnet sind, derart, dass eine Bewegung zwischen Werkzeugrahmen (2) und Anlenkvorrichtung (4) in zumindest einem rotatorischen und/oder translatorischen Freiheitsgrad limitiert ist.

6. Bodenbearbeitungsgerät nach vorstehenden Ansprüchen,
**dadurch gekennzeichnet,**
wobei das zumindest eine Stellmittel (6) zwischen Werkzeugrahmen (2) und/oder dem Anlenkvorrichtung (4) und/oder den Lenkern (8, 9), vorzugsweise zwischen einem ersten Lenker (8) und einem zweiten Lenker (9) angeordnet ist.

7. Bodenbearbeitungsgerät nach vorstehenden Ansprüchen,
**dadurch gekennzeichnet,**
wobei der erste und der zweite Lenker (8, 9) jeweils einen Hebel (15, 16) aufweisen, an deren abstehenden Enden das zumindest eine Stellmittel (6) beweglich angeordnet ist.

8. Bodenbearbeitungsgerät nach vorstehenden Ansprüchen,
**dadurch gekennzeichnet,**
wobei mit zunehmender Auslenkung der Lenker (8, 9) die jeweils abstehenden Enden der Hebel (15, 16) sich zueinander entgegengesetzt bewegend angeordnet sind.

9. Bodenbearbeitungsgerät nach vorstehenden Ansprüchen,
**dadurch gekennzeichnet,**
wobei die Lenker (8, 9) um zueinander konvergierend ausgerichtete Schwenkachsen (19, 20) pendelnd mit dem Werkzeugrahmen (2) verbunden sind.

10. Bodenbearbeitungsgerät nach vorstehenden Ansprüchen,
**dadurch gekennzeichnet,**
wobei der Werkzeugrahmen (2) und die Anlenkvorrichtung (4) an einem ersten Ende des Werkzeugrahmens mittels der Lenker (8, 9) pendelnd und an einem zweiten, dem ersten Ende des Werkzeugrahmens (2) gegenüberliegendem Ende des Werkzeugrahmens mit einem weiteren Gelenk (24) schwenk- oder drehbar verbunden sind.

11. Bodenbearbeitungsgerät nach vorstehenden Ansprüchen,
**dadurch gekennzeichnet,**
wobei der Werkzeugrahmen (2) zumindest ein erstes und ein zweites Teilsegment ausweist, wobei das erste und das zweite Teilsegment von einer eine Arbeitsbreite des Bodenbearbeitungsgerätes (1) definierenden Arbeitsstellung in eine Transportstellung bewegt werden können, welche eine Transportbreite definiert, die geringer als die Arbeitsbreite des Bodenbearbeitungsgerätes (1) ist.

12. Bodenbearbeitungsgerät nach vorstehenden Ansprüchen,
**dadurch gekennzeichnet,**
wobei zumindest ein Teil der Bodenbearbeitungswerkzeuge (3,3') beweglich, vorzugsweise rotatorisch an dem Werkzeugrahmen (2) angeordnet sind.
